(19) Europäisches Patentamt
European Patent Office
Office européen des brevets

(11) EP 3 410 704 A1

(12) # EUROPEAN PATENT APPLICATION
published in accordance with Art. 153(4) EPC

(43) Date of publication:
**05.12.2018 Bulletin 2018/49**

(21) Application number: **16892295.3**

(22) Date of filing: **19.08.2016**

(51) Int Cl.:
***H04N 9/04*** *(2006.01)*

(86) International application number:
**PCT/CN2016/096086**

(87) International publication number:
**WO 2017/148109 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 CN 201610112996**

(71) Applicant: **Huawei Technologies Co., Ltd.**
**Longgang District**
**Shenzhen, Guangdong 518129 (CN)**

(72) Inventors:
- **LI, Li**
**Shenzhen**
**Guangdong 518129 (CN)**
- **WANG, Wei**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(54) **COLOR IMAGING DEVICE, AND METHOD FOR OBTAINING COLOR IMAGES**

(57) Embodiments of the present invention provide a color imaging apparatus, and a method for obtaining a color image, to resolve a problem that color filter manufacturing is relatively difficult. The color imaging apparatus includes a main lens, a micro lens array, and an imaging sensor successively arranged on an optical transmission path. The apparatus further includes a first color filter disposed in an aperture stop of the main lens. The main lens, the first color filter, the micro lens array, and the imaging sensor are parallel and coaxial. The imaging sensor is located on a focal point of the micro lens array. Light covers an M*N-pixel array of the imaging sensor when reaching the imaging sensor after passing through one microlens. The first color filter includes at least one filter capable of filtering out at least one color. A size of the first color filter in any direction perpendicular to an axis is not less than a size of the main lens in a corresponding direction.

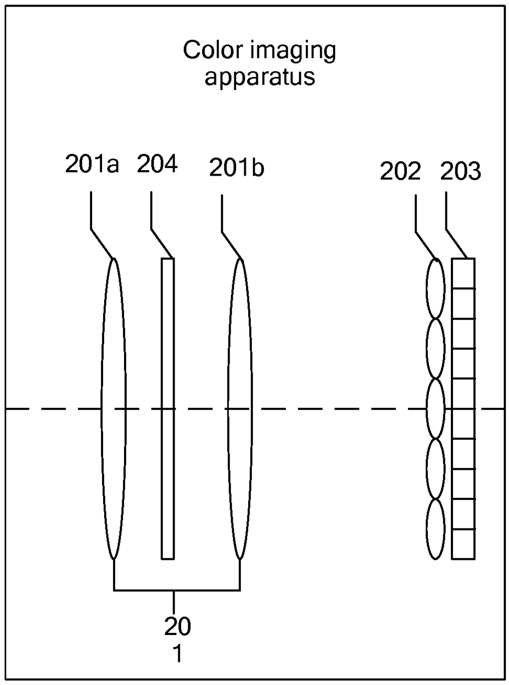


FIG. 3

EP 3 410 704 A1

## Description

This application claims priority to Chinese Patent Application No.201610112996.4, filed with the Chinese Patent Office on February 29, 2016 and entitled "COLOR IMAGING APPARATUS, AND METHOD FOR OBTAINING COLOR IMAGE", which is incorporated herein by reference in its entirety.

## TECHNICAL FIELD

Embodiments of the present invention relate to the field of image processing technologies, and in particular, to a color imaging apparatus, and a method for obtaining a color image.

## BACKGROUND

At present, a color imaging technology has been commonly applied to devices such as a digital camera and a mobile phone. A color imaging sensor includes an imaging sensor that can capture only a greyscale image. The imaging sensor may record light intensity information by converting an incident optical signal into an electrical signal. Because the imaging sensor captures only a greyscale image, a color of the image cannot be identified. Therefore, to obtain a color photograph, skilled persons dispose a color filter on the imaging sensor to differentiate different colors. Therefore, as shown in FIG. 1, a conventional color imaging sensor includes a micro lens array, a color filter, and an imaging sensor, all of which are made together.

At present, a commonly used color filter can be a red (English: red, R for short) filter, a green (English: Green, G for short) filter, or a blue (English: blue, B for short) filter, and is implemented by using multiple Bayer (Bayer) arrays. Each Bayer array is arranged in a 2*2-array form, and includes four subunits. The four subunits are respectively two green filters, one red filter, and one blue filter. A filter of each color corresponds to one pixel in the imaging sensor, so that the pixel is photosensitive to a corresponding color. In this way, each pixel records information about one of three colors: red, green, and blue, and then a color image may be obtained by performing processing by using a color spatial interpolation method.

When a color imaging sensor is made, a size of one subunit in a color filter is equivalent to a size of one pixel in the imaging sensor. Therefore, each subunit in the color filter needs to precisely correspond to each pixel in the imaging sensor. Therefore, the color filter has a fine structure. It is relatively difficult to perform registration for the color filter, and a manufacturing process of the color filter is relatively complex. A larger imaging area of the color imaging sensor indicates a smaller size of a pixel and more difficult manufacturing.

## SUMMARY

Embodiments of the present invention provide a color imaging apparatus, and a method for obtaining a color image, to resolve a prior-art problem that color filter manufacturing is difficult.

According to a first aspect, an embodiment of the present invention provides a color imaging apparatus, including a main lens, a micro lens array, and an imaging sensor successively arranged on an optical transmission path, where the main lens includes at least two einzel lenses that are coaxial and have relative fixed locations; the apparatus further includes a first color filter disposed in an aperture stop of the main lens; the main lens, the first color filter, the micro lens array, and the imaging sensor are parallel and coaxial; the micro lens array includes / microlenses, and the imaging sensor is located on a focal plane of the micro lens array, where the imaging sensor includes *l**M*N pixels, light covers an M*N-pixel array of the imaging sensor when reaching the imaging sensor after passing through any microlens, light covers the *l**M*N pixels included in the imaging sensor when reaching the imaging sensor after passing through the *l* microlenses, and all *l*, M, and N are positive integers; the first color filter includes at least one filter capable of filtering out at least one color; and a size of the first color filter in any direction perpendicular to an axis is not less than a size of the main lens in a corresponding direction.

The color filter is disposed in the aperture stop of the main lens. The micro lens array is located on an image plane of the main lens. Light sent from a scene is imaged on the micro lens array after passing through the main lens and the color filter. After passing through the micro lens array, light having different colors reaches different pixels of the imaging sensor, so that a color image can be obtained. In this embodiment of the present invention, a size of the color filter in any direction perpendicular to the axis is not less than a size of the main lens in a corresponding direction, and is far greater than a size of each unit in a color filter directly manufactured on a surface of the imaging sensor. Therefore, color filter manufacturing difficulty is significantly reduced. In addition, the color filter no longer needs to be manufactured on the imaging sensor. In the prior art, a color filter and an imaging sensor are manufactured simultaneously. Once the color filter is modified, the imaging sensor is also modified. In this embodiment of the present invention, the color filter does not need to be manufactured on the imaging sensor. Therefore, during modification, the color filter can be independently modified.

In a possible design, a distance $dis_n$ between each pixel in the imaging sensor and a pixel located in a center of the imaging sensor is:

$$dis_n = \left(\left(\frac{f[(n_i-1)d+D]}{2F}+\frac{(n_i-1)d}{2}\right)^2+\left(\frac{f[(n_j-1)d+D]}{2F}+\frac{(n_j-1)d}{2}\right)^2\right)^{\frac{1}{2}},$$

$$n_i = 1,2,3,\cdots,N_{pixelx}/2,\ \ n_j = 1,2,3,\cdots,N_{pixely}/2$$

,

where

$n_i$ indicates an $(n_i)^{th}$ pixel away from the pixel in the center of the imaging sensor in a horizontal direction, $n_j$ indicates an $(n_j)^{th}$ pixel away from the pixel in the center of the imaging sensor in a vertical direction, $dis_n$ indicates a distance between the $n^{th}$ pixel and the pixel in the center of the imaging sensor, $n = (n_i, n_j)$, $N_{pixelx}$ indicates a quantity of pixels in the imaging sensor in the horizontal direction, $N_{pixely}$ indicates a quantity of pixels in the imaging sensor in the vertical direction, D indicates a diameter of the main lens, d indicates a diameter of the microlens, F indicates a focal length of the main lens, and f indicates a focal length of the microlens.

When reaching the imaging sensor after passing through a microlens located in the center of the micro lens array, light exactly covers M*N pixels. With a farther distance between a location of a microlens and a location of the center of the micro lens array, light may tilt when passing through the microlens. In particular, on the periphery, if a pixel spacing of the imaging sensor does not change, light transmitted by a microlens located on the periphery illuminates a pixel different from a pixel corresponding to the microlens, and crosstalk between pixels occurs. To avoid crosstalk between pixels, a distance between pixels in the imaging sensor may be designed.

In a possible design, the first color filter includes M*N subunits arranged in an array form, and one subunit corresponds to a single-color filter having one color.

The single-color filter herein is a filter implemented by means of film coating, and the color of the single-color filter cannot be changed.

In a possible design, the first color filter is a red-green-blue RGB filter, the M*N subunits included in the red-green-blue RGB filter separately correspond to a green filter, a red filter, and a blue filter, and both M and N are integers greater than or equal to 2.

In a possible design, the red-green-blue RGB filter is distributed in a Bayer array form. Therefore, crosstalk between pixels caused by multiple colors can be avoided.

In a possible design, the first color filter includes M*N filters that have a Fabry-Perot cavity structure and that are arranged in an array form, and a cavity of a filter having a Fabry-Perot cavity structure is filled with a liquid crystal or an electro-optic crystal that is configured to change a filtered color when a voltage applied to two sides of the cavity of the filter having a Fabry-Perot cavity structure changes.

In the design, the first color filter is designed by using the Fabry-Perot cavity structure, so that a color filtered out by a filter included in the first color filter can be changed, and a transmission spectrum of the first color filter is changed, so that scene information of different wavebands can be obtained by changing a color filtered out by the first color filter, so as to implement multispectral imaging.

In a possible design, the apparatus further includes a first receiving module, a first control module, a first processing module, and a first synthesis module, where

the first receiving module is configured to obtain a first image acquisition instruction for color imaging, where the first image acquisition instruction carries an acquisition mode;

the first control module is configured to: when the acquisition mode is identified as a hyper spectral imaging mode, send a first adjustment instruction to the first processing module, where the first adjustment instruction is used to instruct the first processing module to change, for L times, colors filtered out by the M*N filters that have a Fabry-Perot cavity structure and that are included in the first color filter, and L is equal to a quantity of colors that the filters having a Fabry-Perot cavity structure are capable of filtering out; and

the first processing module is configured to: after receiving the adjustment instruction, adjust a voltage to change colors filtered out by the M*N filters that have a Fabry-Perot cavity structure and that are included in the first color filter; after adjustment is performed by using the first control module, and the first color filter obtains one frame of image, adjust a voltage again to change colors filtered out by the M*N filters that have a Fabry-Perot cavity structure and that are included in the first color filter, until the quantity of colors that the filters having a Fabry-Perot cavity structure are capable of filtering out is reached, so as to obtain L frames of images, where colors filtered out after each time of adjustment by the M*N filters having a Fabry-Perot cavity structure are different, and colors separately filtered out after any two times of adjustment by the M*N filters that have a Fabry-Perot cavity structure and that are in the first color filter are different; and
the first synthesis module is configured to perform fusion processing on the L frames of images obtained by the first processing module by means of processing, to obtain a color image.

In the design, multispectral imaging can be implemented.
In a possible design, the first control module is further configured to:

when the acquisition mode is identified as a red-green-blue RGB imaging mode, send a second adjustment instruction to the first processing module, where the second adjustment instruction is used to instruct the first processing module to change colors filtered out by the M*N filters that have a Fabry-Perot cavity structure and that are included in the first color filter, and colors filtered out after adjustment by the M*N filters having a Fabry-Perot cavity structure merely include red, green, and blue; and
the first processing module is further configured to: after receiving the adjustment instruction sent by the first control module, adjust a voltage to change colors filtered out by the M*N filters that have a Fabry-Perot cavity structure and that are included in the first color filter, where colors filtered out after adjustment by the M*N filters having a Fabry-Perot cavity structure merely include red, green, and blue; and obtain a color image by using the first color filter.

In the design, free switching can be implemented between multispectral imaging and common imaging.
In a possible design, the first color filter is disposed in a rotation structure, the rotation structure further includes at least one second color filter and a rotation axis, and is configured to adjust the first color filter and one color filter of the at least one second color filter by rotating the rotation axis of the rotation structure, so that the first color filter and the one color filter of the at least one second color filter are coaxial with the main lens, the micro lens array, and the imaging sensor; and
a quantity and an arrangement manner of single-color filters included in the at least one second color filter are the same as those of single-color filters included in the first color filter, and any two color filters in the first color filter and the at least one second color filter are single-color filters having different colors.
In the rotation structure design, multispectral imaging can be implemented.
In a possible design, the apparatus further includes a second receiving module, a second control module, a second processing module, and a second synthesis module, where

the second receiving module is configured to obtain a second image acquisition instruction for color imaging, where the second image acquisition instruction carries an acquisition mode;
the second control module is configured to: when the acquisition mode is identified as a hyper spectral imaging mode, rotate the rotation axis of the rotation structure to adjust the first color filter and one color filter of the at least one second color filter included in the rotation structure, so that the first color filter and the one color filter of the at least one second color filter are coaxial with the main lens, the micro lens array, and the imaging sensor, and send, to the second processing module, a shooting instruction used to shoot one frame of image;
the second processing module is configured to: after receiving the shooting instruction, obtain one frame of image by using the one color filter, and send, to the second processing module, a completion instruction indicating that one frame of image is shot;
the second control module is further configured to: when receiving the completion instruction sent by the second processing module, rotate the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor; send again, to the second processing module, a shooting instruction used to shoot one frame of image; and when all L color filters included in the rotation structure are used, send a synthesis instruction to the second synthesis module, so as to obtain L frames of images, where the synthesis instruction is used to instruct the second synthesis module to perform fusion processing on the L frames of images obtained by the second processing module by means of shooting, and L is a positive integer greater than 1; and
after receiving the synthesis instruction sent by the second control module, the second synthesis module performs fusion processing on the L frames of images to obtain a color image.

In the rotation structure design, multispectral color imaging can be implemented.
In a possible design, the first color filter is an RGB filter, where

the second control module is further configured to: when the acquisition mode is identified as an RGB imaging mode, rotate the rotation axis of the rotation structure to adjust the first color filter included in the rotation structure, so that the first color filter is coaxial with the main lens, the micro lens array, and the imaging sensor, and send, to the second processing module, a shooting instruction used to shoot one frame of image; and
the second processing module is configured to: after receiving the shooting instruction, obtain a color image by using the first color filter.

In the design, switching can be implemented between common color image shooting and multispectral color image shooting.

According to a second aspect, an embodiment of the present invention further provides a method for obtaining a color image by using an image acquisition device, where the image acquisition device includes the color imaging apparatus according to the first aspect, and the first color filter in the color imaging apparatus is a Fabry-Perot cavity structure. The method includes:

receiving and obtaining, by the image acquisition device, a first image acquisition instruction for color imaging, where an acquisition mode carried in the first image acquisition instruction is a hyper spectral imaging mode;
adjusting, by the image acquisition device by rotating the rotation axis of the rotation structure, the first color filter and one color filter of the at least one second color filter included in the rotation structure, so that the first color filter and the one color filter of the at least one second color filter are coaxial with the main lens, the micro lens array, and the imaging sensor; obtaining one frame of image by using the one color filter; and rotating the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor, until all L color filters included in the rotation structure are used, so as to obtain L frames of images, where L is a positive integer greater than 1; and
performing, by the image acquisition device, fusion processing on the L frames of images to obtain a color image.

In this embodiment of the present invention, a size of the color filter in any direction perpendicular to an axis is not less than a size of the main lens in a corresponding direction, and is far greater than a size of each unit in a color filter directly manufactured on a surface of the imaging sensor. Therefore, color filter manufacturing difficulty is significantly reduced. In addition, the color filter no longer needs to be manufactured on the imaging sensor. In the prior art, a color filter and an imaging sensor are manufactured simultaneously. Once the color filter is modified, the imaging sensor is also modified. In this embodiment of the present invention, the color filter does not need to be manufactured on the imaging sensor. Therefore, during modification, the color filter can be independently modified. In addition, a multispectral color image can be obtained according to the design.

In a possible design, when the first color filter is an RGB filter, the method further includes:

receiving and obtaining, by the image acquisition device, a second image acquisition instruction for color imaging, where an acquisition mode carried in the second image acquisition instruction is a red-green-blue RGB imaging mode; and
adjusting, by the image acquisition device, the first color filter, so that the first color filter is coaxial with the main lens, the micro lens array, and the imaging sensor, and obtaining a color image by using the first color filter.

According to a third aspect, an embodiment of the present invention provides a method for obtaining a color image by using an image acquisition device, where the image acquisition device includes the color imaging apparatus according to the first aspect, and the first color filter included in the color imaging apparatus is disposed in the rotation structure. The method includes:

receiving and obtaining, by the image acquisition device, a first image acquisition instruction for color imaging, where an acquisition mode carried in the first image acquisition instruction is a hyper spectral imaging mode;
adjusting, by the image acquisition device, a voltage to change colors filtered out by the M*N filters that have a Fabry-Perot cavity structure and that are included in the first color filter; obtaining one frame of image by using the first color filter; and adjusting a voltage again to change colors filtered out by the M*N filters that have a Fabry-Perot cavity structure and that are included in the first color filter, until a quantity of colors that the filters having a Fabry-Perot cavity structure are capable of filtering out is reached, so as to obtain L frames of images, where colors filtered out after each time of adjustment by the M*N filters having a Fabry-Perot cavity structure are different, colors separately filtered out after any two times of adjustment by the M*N filters that have a Fabry-Perot cavity structure and that are in the first color filter are different, and L is equal to the quantity of colors that the filters having a Fabry-Perot cavity structure are capable of filtering out; and
performing, by the image acquisition device, fusion processing on the L frames of images to obtain a color image.

In this embodiment of the present invention, a size of the color filter in any direction perpendicular to an axis is not less than a size of the main lens in a corresponding direction, and is far greater than a size of each unit in a color filter directly manufactured on a surface of the imaging sensor. Therefore, color filter manufacturing difficulty is significantly reduced. In addition, the color filter no longer needs to be manufactured on the imaging sensor. In the prior art, a color filter and an imaging sensor are manufactured simultaneously. Once the color filter is modified, the imaging sensor is also modified. In this embodiment of the present invention, the color filter does not need to be manufactured on the imaging sensor. Therefore, during modification, the color filter can be independently modified. In addition, a multispectral color image can be obtained according to the design.

In a possible design, the method further includes:

receiving and obtaining, by the image acquisition device, a second image acquisition instruction for color imaging, where an acquisition mode carried in the second image acquisition instruction is a red-green-blue RGB imaging mode;
adjusting, by the image acquisition device, a voltage to change colors filtered out by the M*N filters that have a Fabry-Perot cavity structure and that are included in the first color filter, where colors filtered out after adjustment by the M*N filters having a Fabry-Perot cavity structure merely include red, green, and blue; and
obtaining, by the image acquisition device, a color image by using the first color filter.

In the implementation manner, switching can be implemented between common color image shooting and multispectral color image shooting.

## BRIEF DESCRIPTION OF DRAWINGS

FIG. 1 is a schematic structural diagram of a color sensor in the prior art;
FIG. 2 is a schematic diagram of a color imaging apparatus according to an embodiment of the present invention;
FIG. 3 is a schematic diagram of another color imaging apparatus according to an embodiment of the present invention;
FIG. 4 is a schematic cross-sectional diagram of a correspondence between a microlens and an imaging sensor according to an embodiment of the present invention;
FIG. 5 is a schematic front diagram of a correspondence between a microlens and an imaging sensor according to an embodiment of the present invention;
FIG. 6 is a schematic diagram of a light offset according to an embodiment of the present invention;
FIG. 7 is a schematic structural diagram of a first color filter according to an embodiment of the present invention;
FIG. 8A is a schematic diagram of an optical path according to an embodiment of the present invention;
FIG. 8B is a schematic diagram of color information recorded by an imaging sensor according to an embodiment of the present invention;
FIG. 9 is a schematic structural diagram of a liquid-crystal Fabry-Perot cavity according to an embodiment of the present invention;
FIG. 10 is a schematic structural diagram of an electro-optic-crystal Fabry-Perot cavity according to an embodiment of the present invention;
FIG. 11 is a schematic diagram of still another color imaging apparatus according to an embodiment of the present invention;
FIG. 12 is a schematic diagram of a rotation structure according to an embodiment of the present invention;
FIG. 13 is a schematic diagram of a color of a color filter in a rotation structure according to an embodiment of the present invention;
FIG. 14 is a schematic diagram of yet another color imaging apparatus according to an embodiment of the present invention;
FIG. 15 is a flowchart of a method for obtaining a color image by using an image acquisition device according to an embodiment of the present invention;
FIG. 16 is a flowchart of another method for obtaining a color image by using an image acquisition device according to an embodiment of the present invention; and
FIG. 17 is a flowchart of still another method for obtaining a color image by using an image acquisition device according to an embodiment of the present invention.

## DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Embodiments of the present invention provide a color imaging apparatus, and a method for obtaining a color image, to resolve a prior-art problem that color filter manufacturing is difficult. A specific application scenario of the embodiments of the present invention may be the same as that of a conventional CMOS/CCD color imaging sensor. Specifically, a color image may be obtained from an imaging device such as a lens of a camera or a camera lens of a mobile phone. The method and the apparatus are based on a same inventive concept. A problem-resolving principle of the method is similar to that of the apparatus. Therefore, mutual reference may be made to implementation of the apparatus and the method, and repeated details are not described.

It should be noted that, in the specification, claims, and accompanying drawings of the embodiments of the present invention, the terms "first", "second", and the like are intended to distinguish between similar objects but are not necessarily used to indicate a specific order or sequence.

Referring to FIG. 2, FIG. 2 is a schematic diagram of a color imaging apparatus according to an embodiment of the present invention. The color imaging apparatus includes a main lens, a micro lens array, and an imaging sensor successively arranged on an optical transmission path. The color imaging apparatus further includes a color filter disposed in an aperture stop of the main lens. The main lens, the color filter, the micro lens array, and the imaging sensor are parallel and coaxial. The micro lens array includes / microlenses. Focal lengths of the / microlenses are the same. The imaging sensor is located on a focal plane of the micro lens array. The imaging sensor includes L*M*N pixels. Light covers an M*N-pixel array of the imaging sensor when reaching the imaging sensor after passing through any microlens, and light covers the L*M*N pixels included in the imaging sensor when reaching the imaging sensor after passing through the L microlenses. That is, the imaging sensor includes L M*N-pixel arrays. Each M*N-pixel array corresponds to one microlens. The L M*N-pixel arrays correspond to the L microlenses. All L, M, and N are positive integers.

The color filter includes at least one filter capable of filtering out at least one color. A size of the color filter in any direction perpendicular to an axis is not less than a size of the main lens in a corresponding direction.

The color filter is disposed in the aperture stop of the main lens. The micro lens array is located on an image plane of the main lens. Light sent from a scene is imaged on the micro lens array after passing through the main lens and the color filter. After passing through the micro lens array, light having different colors reaches different pixels of the imaging sensor, so that a color image can be obtained. In this embodiment of the present invention, a size of the color filter in any direction perpendicular to the axis is not less than a size of the main lens in a corresponding direction, and is far greater than a size of each unit in a color filter directly manufactured on a surface of the imaging sensor. Therefore, color filter manufacturing difficulty is significantly reduced. In addition, the color filter no longer needs to be manufactured on the imaging sensor. In the prior art, a color filter and an imaging sensor are manufactured simultaneously. Once the color filter is modified, the imaging sensor is also modified. In this embodiment of the present invention, the color filter does not need to be manufactured on the imaging sensor. Therefore, during modification, the color filter can be independently modified.

Referring to FIG. 3, FIG. 3 is a color imaging apparatus according to an embodiment of the present invention. In FIG. 3, an example in which a main lens includes two einzel lenses is used. The color imaging apparatus includes a main lens 201, a micro lens array 202, and an imaging sensor 203 successively arranged on an optical transmission path. The main lens 201 includes a first einzel lens 201a and a second einzel lens 201b. Certainly, the main lens may include multiple einzel lenses, and this is not specifically limited in this embodiment of the present invention. The apparatus further includes a first color filter 204 disposed in an aperture stop of the main lens.

The two einzel lenses in the main lens 201, the first color filter 204, the micro lens array 202, and the imaging sensor 203 are parallel and coaxial.

The micro lens array 202 includes / microlenses. The micro lens array 202 may be fastened together with the imaging sensor 203. Light covers an M*N-pixel array of the imaging sensor when reaching the imaging sensor after passing through any microlens, and light covers /*M*N pixels included in the imaging sensor when reaching the imaging sensor after passing through the / microlenses. That is, the imaging sensor includes / M*N-pixel arrays. Each M*N-pixel array corresponds to one microlens. The L M*N-pixel arrays correspond to the / microlenses. All /, M, and N are positive integers.

As shown in FIG. 4 of a cross-sectional diagram and FIG. 5 of a front-sectional diagram, in an example in which M = N = 2, one microlens corresponds to a 2*2-pixel array formed by four pixels of the imaging sensor 203. Four squares in FIG. 4 represent the four pixels of the imaging sensor 203, and a circle represents the microlens.

The first color filter 204 includes at least one filter. The at least one filter is capable of filtering out at least one color. That is, the filter may be a single-color filter, and is capable of filtering out merely one color, or may be a filter that can transmit, in different conditions, light having different colors.

A size of the first color filter 204 in any direction perpendicular to an axis is not less than a size of the main lens 201 in a corresponding direction.

That a size of the first color filter 204 in any direction perpendicular to the axis is not less than a size of the main lens 201 in a corresponding direction means that the color filter 204 can completely cover the main lens 201 in a direction perpendicular to the axis. For example, if the first color filter 204 has a circular structure in a direction perpendicular to the axis, and the main lens 201 also has a circular structure in the direction perpendicular to the axis, a diameter of the first color filter 204 is not less than a diameter of the main lens 201. The main lens herein includes multiple einzel lenses. For the size of the main lens, a size of a maximum einzel lens prevails.

When reaching the imaging sensor after passing through a microlens located in a center of the micro lens array, light exactly covers M*N pixels. With a farther distance between a location of a microlens and a location of the center of the micro lens array, light may tilt when passing through the microlens. In particular, on the periphery, if a pixel spacing of the imaging sensor does not change, light transmitted by a microlens located on the periphery illuminates a pixel different from a pixel corresponding to the microlens, and crosstalk between pixels occurs.

A distance between pixels in the imaging sensor may be set to avoid crosstalk between pixels. Specific setting is as follows: A distance $dis_n$ between each pixel in the imaging sensor and a pixel located in a center of the imaging sensor is:

$$dis_n = \left(\left(\frac{f[(n_i-1)d+D]}{2F}+\frac{(n_i-1)d}{2}\right)^2+\left(\frac{f[(n_j-1)d+D]}{2F}+\frac{(n_j-1)d}{2}\right)^2\right)^{\frac{1}{2}},$$

$$n_i = 1,2,3,\cdots,N_{pixelx}/2,\quad n_j = 1,2,3,\cdots,N_{pixely}/2$$

,

where

$n_i$ indicates an $(n_i)^{th}$ pixel away from the pixel in the center of the imaging sensor in a horizontal direction, $n_j$ indicates an $(n_j)^{th}$ pixel away from the pixel in the center of the imaging sensor in a vertical direction, $dis_n$ indicates a distance between the $n^{th}$ pixel and the pixel in the center of the imaging sensor, $n = (n_i, n_j)$, $N_{pixelx}$ indicates a quantity of pixels in the imaging sensor in the horizontal direction, $N_{pixely}$ indicates a quantity of pixels in the imaging sensor in the vertical direction, $D$ indicates a diameter of the main lens, $d$ indicates a diameter of the microlens, $F$ indicates a focal length of the main lens, and $f$ indicates a focal length of the microlens.

The formula is obtained by means of calculation in the following manner.

To eliminate crosstalk due to a light offset caused when light passes through a microlens, a pixel spacing of the imaging sensor is designed in the present invention. Specifically, it is set that a location of the pixel in the center is (0, 0), and a location of an $(n_i, n_j)^{th}$ pixel is ($n_i d_{pixelx}+\Delta h_{n_i}$, $n_i d_{pixely}+\Delta h_{n_j}$). An increase in the pixel spacing may reduce crosstalk between different pixels in a same sub-image due to a diffraction effect.

On a coordinate axis using an image center as a center, an offset obtained after peripheral light passes through an outmost microlens may be calculated according to a geometrical relationship:

$$\Delta h_P = \frac{f[(P/2-1)d+D]}{2F}-\frac{d}{2},$$

where

$P$ is a quantity of microlenses in a horizontal/vertical direction, $D$ is a diameter of the main lens, $d$ is a diameter of the microlens, $F$ indicates a focal length of the main lens, $f$ indicates a focal length of the microlens, and $\Delta h_P$ is an offset obtained after light on the periphery of the main lens passes through an outmost microlens.

As shown in FIG. 6, a peripheral light offset corresponding to each microlens is:

$$\Delta h_{n_i} = \frac{f[(n_i-1)d+D]}{2F}-\frac{d}{2},\quad n_i=1, 2, \ldots, P/2,$$

and

$$\Delta h_{n_j} = \frac{f[(n_j - 1)d + D]}{2F} - \frac{d}{2}, \; n_j = 1, 2, \ldots, P/2,$$

where

$\Delta h_{n_i}$ indicates a peripheral light offset corresponding to each microlens in a horizontal direction, and $\Delta h_{n_j}$ indicates a peripheral light offset corresponding to each microlens in a vertical direction. Therefore, a distance $dis_n$ between each pixel in the imaging sensor and the pixel located in the center of the imaging sensor can be determined as:

$$dis_n = \left(\left(\frac{f[(n_i - 1)d + D]}{2F} + \frac{(n_i - 1)d}{2}\right)^2 + \left(\frac{f[(n_j - 1)d + D]}{2F} + \frac{(n_j - 1)d}{2}\right)^2\right)^{\frac{1}{2}},$$

$$n_i = 1,2,3,\cdots, N_{pixelx}/2, \;\; n_j = 1,2,3,\cdots, N_{pixely}/2$$

Optionally, the first color filter 204 includes M*N subunits arranged in an array form. One subunit corresponds to a single-color filter having one color. Colors of any two single-color filters may be different, or may be the same. In addition, the any two single-color filters may be in kinds of colors, and may be randomly arranged in the M*N subunits. This is not specifically limited in the present invention. That is, M*N single-color filters may include M*N colors. The single-color filter herein is a filter implemented by means of film coating, and the color of the single-color filter cannot be changed.

Herein, a quantity of subunits included in the first color filter 204 is the same as a quantity of pixels corresponding to one microlens. When the color filter 204 includes not only three colors: red, green, and blue, multispectral imaging can be implemented, and scene information of different wavebands can be obtained.

Optionally, the first color filter 204 may be an RGB filter. M*N subunits included in the RGB filter separately correspond to a green filter, a red filter, and a blue filter, and can record information about three colors. A manner of arranging the green filter, the red filter, and the blue filter in the M*N subunits is not specifically limited in this embodiment of the present invention. Specifically, they may be arranged in an arrangement manner of a Bayer array.

For example, as shown in FIG. 7, M = N = 2. The first color filter 204 is of a 2*2-Bayer-array structure, and can record information about three colors. That is, the color filter 204 includes four subunits, of which two subunits correspond to green, one subunit corresponds to red, and one subunit corresponds to blue.

The first color filter 204 is disposed in the aperture stop of the main lens 201. The micro lens are located on an image plane of the main lens 201. Light sent from a scene can be exactly imaged on the micro lens array after passing through the main lens 201 and the first color filter 204. As shown in FIG. 8A, after passing through the micro lens array, light having different colors is separated, and reaches different pixels of the imaging sensor 203. Color information recorded by the imaging sensor 203 is shown in FIG. 8B. An initial image recorded by the imaging sensor 203 includes only light intensity information, and the initial image is merely a greyscale image. Therefore, the color information needs to be identified by using a pixel location.

Subsequently, obtaining a color image by means of processing according to the color information carried in the imaging sensor 203 may be implemented in the following manner.

Four pixels that carry information about different colors and that correspond to each microlens may be fused into one pixel. In addition, the four pixels are located in one Bayer array. Therefore, a displayed image can record complete original color information and intensity information.

Optionally, a structure of the color filter 204 may further be designed in this embodiment of the present invention, so that a color filtered out by a filter included in the first color filter 204 can be changed, and a transmission spectrum of the first color filter 204 is changed, so that scene information of different wavebands can be obtained by changing a color filtered out by the first color filter 204, so as to implement multispectral imaging. Specifically, the first color filter 204 includes M*N filters that have a Fabry-Perot cavity structure and that are arranged in an array form, and a cavity of a filter having a Fabry-Perot cavity structure is filled with a liquid crystal or an electro-optic crystal that is configured to change a filtered color when a voltage applied to two sides of the cavity of the filter having a Fabry-Perot cavity structure changes.

A Fabry-Perot cavity includes two glass plates that are parallel or that have a relatively small wedge angle. Opposite inner surfaces of the two glass plates have high reflectivity. When a frequency of incident light meets a resonance condition, a transmission spectrum of the incident light has a high peak, and the high peak corresponds to high transmissivity. A change of a spacing between two reflectors indicates a change of the transmission spectrum. The spacing between the two reflectors is a distance between the inner surfaces of the two glass plates whose inner surfaces have high reflectivity.

Spectral transmissivity may be represented as:

$$\frac{I}{I_0} = \frac{1}{1 + F^F \sin^2(\frac{2\pi m d^d \cos\theta}{\lambda})},$$

where

$F^F$ indicates fineness of a Fabry-Perot cavity, *1* indicates a light intensity of transmitted light, $I_0$ indicates a light intensity of incident light, *m* indicates a refractive index of a medium, $d^d$ indicates a spacing between two reflectors, $\theta$ indicates an incident angle of light, and $\lambda$ indicates a wavelength. In this embodiment of the present invention, spectral transmissivity of a Fabry-Perot cavity may be controlled by changing a refractive index of a medium. A refractive index of a medium may be changed by using a material having an electro-optic effect, such as a liquid crystal or an electro-optic crystal. A refractive index of the material changes with a function of an applied electric field.

Referring to FIG. 9, FIG. 9 is a schematic structural diagram of a liquid-crystal Fabry-Perot cavity. The liquid-crystal Fabry-Perot cavity means that the Fabry-Perot cavity is filled with a liquid crystal. The Fabry-Perot cavity separately has a glass plate 601, a conductive electrode 602, a liquid crystal molecule guide layer 603, and a liquid crystal 604 from outside to inside. The liquid crystal is an innermost layer of the Fabry-Perot cavity. An inner surface of the glass plate 601 has high reflectivity, so that two symmetric glass plates form reflectors. A voltage may be applied to the entire Fabry-Perot cavity by using the conductive electrode 602. The Fabry-Perot cavity is filled with the liquid crystal. The liquid crystal has optical anisotropy. A refractive index in a direction of a molecular macroaxis is different from a refractive index in a direction of a brachyaxis. After a voltage is applied to the conductive electrode 602, an electric field is formed between two conductive electrodes. A liquid crystal molecule deflects under an action of the electric field. Therefore, the refractive index changes accordingly.

Referring to FIG. 10, FIG. 10 is a schematic structural diagram of an electro-optic-crystal Fabry-Perot cavity. The electro-optic-crystal Fabry-Perot cavity means that the Fabry-Perot cavity is filled with an electro-optic crystal. The Fabry-Perot cavity separately has a glass plate 701, a conductive electrode 702, and an electro-optic crystal 703 from outside to inside. The electro-optic crystal is a crystal material having an electro-optic effect. A refractive index of the electro-optic crystal changes with a voltage applied to the electro-optic crystal. A material of the electro-optic crystal may be deuterated potassium dihydrogen phosphate (DKDP), ammonium dihydrogen phosphate (ADP), or the like.

When the first color filter 204 is one filter having a Fabry-Perot cavity, during multispectral imaging implementation, multiple frames of images are shot, and the filter is changed once each time one frame of image is shot. That is, a cavity voltage of the Fabry-Perot cavity of the filter is changed. Then, L frames of images are shot. L is a total quantity of spectral channels that the filter having a Fabry-Perot cavity is capable of implementing, that is, a quantity of colors that the filter having a Fabry-Perot cavity is capable of filtering out. Fusion processing is performed on the L frames of images, so as to obtain a multispectral color image.

The first color filter 204 includes multiple filters having a Fabry-Perot cavity structure. A cavity voltage of each Fabry-Perot cavity is adjusted, so that spectral transmissivity of any two Fabry-Perot cavities is different, so that a multispectral color image can be obtained with no need of multi-frame shooting. Certainly, multi-frame shooting may be performed, so that an obtained multispectral color image has higher spatial resolution.

When the first color filter 204 is a filter having a Fabry-Perot cavity structure, as shown in FIG. 11, the apparatus further includes a first receiving module 801, a first control module 802, a first processing module 803, and a first synthesis module 804.

The first receiving module 801 is configured to obtain a first image acquisition instruction for color imaging, where the first image acquisition instruction carries an acquisition mode.

The first control module 802 is configured to: when the acquisition mode is identified as a hyper spectral imaging mode, send a first adjustment instruction to the first processing module 803, where the first adjustment instruction is used to instruct the first processing module 803 to change, for L times, colors filtered out by the M*N filters that have a Fabry-Perot cavity structure and that are included in the first color filter 204, and L is equal to a quantity of colors that the filters having a Fabry-Perot cavity structure are capable of filtering out.

The first processing module 803 is configured to: after receiving the adjustment instruction sent by the first control module 802, adjust a voltage to change colors filtered out by the M*N filters that have a Fabry-Perot cavity structure and that are included in the first color filter 204; after adjustment is performed by using the first control module 802, and the first color filter 204 obtains one frame of image, adjust a voltage again to change colors filtered out by the M*N filters that have a Fabry-Perot cavity structure and that are included in the first color filter 204, until the quantity of colors that the filters having a Fabry-Perot cavity structure are capable of filtering out is reached, so as to obtain L frames of images, where colors filtered out after each time of adjustment by the M*N filters having a Fabry-Perot cavity structure are different, and colors separately filtered out after any two times of adjustment by the M*N filters that have a Fabry-Perot cavity structure and that are in the first color filter 204 are different.

The first synthesis module 804 is configured to perform fusion processing on the L frames of images obtained by the first processing module 803 by means of processing, to obtain a color image.

Optionally, the first control module 802 may be further configured to: when the acquisition mode is identified as a red-green-blue RGB imaging mode, send a second adjustment instruction to the first processing module 803, where the second adjustment instruction is used to instruct the first processing module 803 to change colors filtered out by the M*N filters that have a Fabry-Perot cavity structure and that are included in the first color filter 204, and colors filtered out after adjustment by the M*N filters having a Fabry-Perot cavity structure merely include red, green, and blue.

The first processing module 803 is further configured to: after receiving the adjustment instruction sent by the first control module 802, adjust a voltage to change colors filtered out by the M*N filters that have a Fabry-Perot cavity structure and that are included in the first color filter 204, where colors filtered out after adjustment by the M*N filters having a Fabry-Perot cavity structure merely include red, green, and blue; and obtain a color image by using the first color filter 204.

Optionally, when the first color filter 204 includes multiple single-color filters, that is, a single-color filter is implemented by means of film coating, and a color of the single-color filter cannot be changed, the first color filter 204 may be further disposed in a rotation structure 205. The rotation structure 205 further includes at least one second color filter, and is configured to adjust the first color filter 204 and one color filter of the at least one second color filter by rotating the rotation structure 205, so that the first color filter 204 and the one color filter of the at least one second color filter are coaxial with the main lens 201, the micro lens array 202, and the imaging sensor 203.

A quantity and an arrangement manner of single-color filters included in the at least one second color filter are the same as those of single-color filters included in the first color filter 204, and any two color filters in the first color filter 204 and the at least one second color filter are single-color filters having different colors.

For example, as shown in FIG. 12, the rotation structure 205 includes four color filters. Each second color filter may include four subunits, and each subunit corresponds to a single-color filter having one color. 4*4 colors may be included. As shown in FIG. 13, each number in FIG. 13 represents one color. Certainly, four second color filters may be disposed, and the four second color filters may include one RGB filter, so that the RGB filter can be used to obtain a color image when multispectral imaging is not required.

In the implementation manner, switching can be implemented between common color image shooting and multispectral color image shooting.

Certainly, the four color filters included in the rotation structure 205 may be filters having a Fabry-Perot cavity structure. Multiple frames of images may be shot by adjusting spectral transmissivity of each Fabry-Perot cavity or adjusting the rotation structure 205, so as to obtain more spectral image information.

Based on the rotation structure 205, as shown in FIG. 14, the apparatus may further include a second receiving module 901, a second control module 902, a second processing module 903, and a second synthesis module 904.

The second receiving module 901 is configured to obtain a second image acquisition instruction for color imaging, where the second image acquisition instruction carries an acquisition mode.

The second control module 902 is configured to: when the acquisition mode is identified as a hyper spectral imaging mode, rotate a rotation axis of the rotation structure 205 to adjust the first color filter 204 and one color filter of the at least one second color filter included in the rotation structure 205, so that the first color filter 204 and the one color filter of the at least one second color filter are coaxial with the main lens 201, the micro lens array 202, and the imaging sensor 203, and send, to the second processing module 903, a shooting instruction used to shoot one frame of image.

The second processing module 903 is configured to: after receiving the shooting instruction, obtain one frame of image by using the one color filter, and send, to the second processing module 903, a completion instruction indicating that one frame of image is shot.

The second control module 902 is further configured to: when receiving the completion instruction sent by the second processing module 903, rotate the rotation axis of the rotation structure 205 again to adjust the first color filter 204 and another color filter of the at least one second color filter included in the rotation structure 205, so that the first color filter 204 and the another color filter of the at least one second color filter are coaxial with the main lens 201, the micro lens array 202, and the imaging sensor 203; send again, to the second processing module 903, a shooting instruction used to shoot one frame of image; and when all L color filters included in the rotation structure 205 are used, send a synthesis instruction to the second synthesis module 904, so as to obtain L frames of images, where the synthesis instruction is used to instruct the second synthesis module to perform fusion processing on the L frames of images obtained by the second processing module 903 by means of shooting, and L is a positive integer greater than 1.

After receiving the synthesis instruction sent by the second control module 902, the second synthesis module 904 performs fusion processing on the L frames of images to obtain a color image.

Optionally, when the first color filter 204 is an RGB filter, the second control module 902 is further configured to: when the acquisition mode is identified as an RGB imaging mode, rotate the rotation axis of the rotation structure 205 to adjust the first color filter 204 included in the rotation structure 205, so that the first color filter 204 is coaxial with the main lens 201, the micro lens array 202, and the imaging sensor 203, and send, to the second processing module 903, a shooting instruction used to shoot one frame of image.

The second processing module 903 is configured to: after receiving the shooting instruction, obtain a color image by using the first color filter 204.

An embodiment of the present invention further provides a method for obtaining a color image by using an image acquisition device. The image acquisition device includes a color imaging apparatus, and the color imaging apparatus uses the foregoing rotation structure.

As shown in FIG. 15, the method includes:

S1101. The image acquisition device receives and obtains a first image acquisition instruction for color imaging, where an acquisition mode carried in the first image acquisition instruction is a hyper spectral imaging mode.
S1102. The image acquisition device adjusts, by rotating the rotation axis of the rotation structure, the first color filter and one color filter of the at least one second color filter included in the rotation structure, so that the first color filter and the one color filter of the at least one second color filter are coaxial with the main lens, the micro lens array, and the imaging sensor; obtains one frame of image by using the one color filter; and rotates the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor, until all L color filters in the rotation structure are used, so as to obtain L frames of images, where L is a positive integer greater than 1.
S1103. The image acquisition device performs fusion processing on the L frames of images to obtain a color image.

Optionally, when the first color filter in the rotation structure is an RGB filter, the method for obtaining a color image by using an image acquisition device shown in FIG. 16 may include:

S1201. The image acquisition device receives and obtains a first image acquisition instruction for color imaging, where the first image acquisition instruction carries an acquisition mode.
S1202. The image acquisition device determines the acquisition mode; and when the acquisition mode is an RGB imaging mode, performs S1204; or when the acquisition mode is a hyper spectral imaging mode, performs S1203.
S1203. The image acquisition device adjusts, by rotating the rotation axis of the rotation structure, the first color filter and one color filter of the at least one second color filter included in the rotation structure, so that the first color filter and the one color filter of the at least one second color filter are coaxial with the main lens, the micro lens array, and the imaging sensor; obtains one frame of image by using the one color filter; and rotates the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor, until all L color filters in the rotation structure are used, so as to obtain L frames of images, where L is a positive integer greater than 1; and performs S1205.
S1204. Adjust the RGB filter, so that the RGB filter is coaxial with the main lens, the micro lens array, and the imaging sensor; and obtain a color image by using the RGB filter.
S1205. The image acquisition device performs fusion processing on the L frames of images to obtain a color image.

An embodiment of the present invention further provides a method for obtaining a color image by using an image acquisition device. The image acquisition device includes a color imaging apparatus, and the color imaging apparatus uses the foregoing filter having a Fabry-Perot cavity.

As shown in FIG. 17, the method includes:

S1301. The image acquisition device receives and obtains a first image acquisition instruction for color imaging, where an acquisition mode carried in the first image acquisition instruction is a hyper spectral imaging mode.
S1302. The image acquisition device adjusts a voltage to change colors filtered out by the M*N filters that have a Fabry-Perot cavity structure and that are included in the first color filter; obtains one frame of image by using the first color filter; and adjusts a voltage again to change colors filtered out by the M*N filters that have a Fabry-Perot cavity structure and that are included in the first color filter, until a quantity of colors that the filters having a Fabry-Perot cavity structure are capable of filtering out is reached, so as to obtain L frames of images.

Colors filtered out after each time of adjustment by the M*N filters having a Fabry-Perot cavity structure are different, and colors separately filtered out after any two times of adjustment by the M*N filters that have a Fabry-Perot cavity structure and that are in the first color filter are different. L is equal to the quantity of colors that the filters having a Fabry-Perot cavity structure are capable of filtering out.

S1303. The image acquisition device performs fusion processing on the L frames of images to obtain a color image.

Optionally, the method may further include:

receiving and obtaining, by the image acquisition device, a second image acquisition instruction for color imaging, where an acquisition mode carried in the second image acquisition instruction is an RGB imaging mode;
adjusting, by the image acquisition device, a voltage to change colors filtered out by the M*N filters that have a Fabry-Perot cavity structure and that are included in the first color filter, where colors filtered out after adjustment by the M*N filters having a Fabry-Perot cavity structure merely include red, green, and blue; and
obtaining, by the image acquisition device, a color image by using the first color filter.

In the implementation manner, switching can be implemented between common color image shooting and multispectral color image shooting.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

**1.** A color imaging apparatus, comprising a main lens, a micro lens array, and an imaging sensor successively arranged on an optical transmission path, wherein
the main lens comprises at least two einzel lenses that are coaxial and have relative fixed locations;
the apparatus further comprises a first color filter disposed in an aperture stop of the main lens;
the main lens, the first color filter, the micro lens array, and the imaging sensor are parallel and coaxial;

the micro lens array comprises $I$ microlenses, and the imaging sensor is located on a focal plane of the micro lens array, wherein the imaging sensor comprises $I$*M*N pixels, light covers an M*N-pixel array of the imaging sensor when reaching the imaging sensor after passing through any microlens, light covers the $I$*M*N pixels comprised in the imaging sensor when reaching the imaging sensor after passing through the $I$ microlenses, and all $I$, M, and N are positive integers;
the first color filter comprises at least one filter capable of filtering out at least one color; and
a size of the first color filter in any direction perpendicular to an axis is not less than a size of the main lens in a corresponding direction.

2. The apparatus according to claim 1, wherein a distance $dis_n$ between each pixel in the imaging sensor and a pixel located in a center of the imaging sensor is:

$$dis_n = ((\frac{f[(n_i-1)d+D]}{2F}+\frac{(n_i-1)d}{2})^2+(\frac{f[(n_j-1)d+D]}{2F}+\frac{(n_j-1)d}{2})^2)^{\frac{1}{2}},$$

$$n_i = 1,2,3,\cdots,N_{pixelx}/2,\ \ n_j = 1,2,3,\cdots,N_{pixely}/2$$

,

wherein
$n_i$ indicates an $(n_i)^{th}$ pixel away from the pixel in the center of the imaging sensor in a horizontal direction, $n_j$ indicates an $(n_j)^{th}$ pixel away from the pixel in the center of the imaging sensor in a vertical direction, $dis_n$ indicates a distance between the $n^{th}$ pixel and the pixel in the center of the imaging sensor, $n = (n_i, nj)$, $N_{pixelx}$ indicates a quantity of pixels in the imaging sensor in the horizontal direction, $N_{pixely}$ indicates a quantity of pixels in the imaging sensor in the vertical direction, D indicates a diameter of the main lens, d indicates a diameter of the microlens, F indicates a focal length of the main lens, and $f$ indicates a focal length of the microlens.

3. The apparatus according to claim 1 or 2, wherein the first color filter comprises M*N subunits arranged in an array form, and one subunit corresponds to a single-color filter having one color.

4. The apparatus according to claim 3, wherein the first color filter is a red-green-blue RGB filter, the M*N subunits comprised in the red-green-blue RGB filter separately correspond to a green filter, a red filter, and a blue filter, and both M and N are integers greater than or equal to 2.

5. The apparatus according to claim 4, wherein the red-green-blue RGB filter is distributed in a Bayer array form.

6. The apparatus according to claim 1 or 2, wherein the first color filter comprises M*N filters that have a Fabry-Perot cavity structure and that are arranged in an array form, and a cavity of a filter having a Fabry-Perot cavity structure is filled with a liquid crystal or an electro-optic crystal that is configured to change a filtered color when a voltage applied to two sides of the cavity of the filter having a Fabry-Perot cavity structure changes.

7. The apparatus according to claim 6, wherein the apparatus further comprises a first receiving module, a first control module, a first processing module, and a first synthesis module, wherein
the first receiving module is configured to obtain a first image acquisition instruction for color imaging, wherein the first image acquisition instruction carries an acquisition mode;
the first control module is configured to: when the acquisition mode is identified as a hyper spectral imaging mode, send a first adjustment instruction to the first processing module, wherein the first adjustment instruction is used to instruct the first processing module to change, for L times, colors filtered out by the M*N filters that have a Fabry-Perot cavity structure and that are comprised in the first color filter, and L is equal to a quantity of colors that the filters having a Fabry-Perot cavity structure are capable of filtering out; and
the first processing module is configured to: after receiving the adjustment instruction, adjust a voltage to change colors filtered out by the M*N filters that have a Fabry-Perot cavity structure and that are comprised in the first color filter; after adjustment is performed by using the first control module, and the first color filter obtains one frame of image, adjust a voltage again to change colors filtered out by the M*N filters that have a Fabry-Perot cavity structure and that are comprised in the first color filter, until the quantity of colors that the filters having a Fabry-Perot cavity structure are capable of filtering out is reached, so as to obtain L frames of images, wherein colors filtered out after each time of adjustment by the M*N filters having a Fabry-Perot cavity structure are different, and colors separately filtered out after any two times of adjustment by the M*N filters that have a Fabry-Perot cavity structure and that are in the first color filter are different; and
the first synthesis module is configured to perform fusion processing on the L frames of images obtained by the first processing module by means of processing, to obtain a color image.

**8.** The apparatus according to claim 7, wherein the first control module is further configured to:

when the acquisition mode is identified as a red-green-blue RGB imaging mode, send a second adjustment instruction to the first processing module, wherein the second adjustment instruction is used to instruct the first processing module to change colors filtered out by the M*N filters that have a Fabry-Perot cavity structure and that are comprised in the first color filter, and colors filtered out after adjustment by the M*N filters having a Fabry-Perot cavity structure merely include red, green, and blue; and
the first processing module is further configured to: after receiving the adjustment instruction sent by the first control module, adjust a voltage to change colors filtered out by the M*N filters that have a Fabry-Perot cavity structure and that are comprised in the first color filter, wherein colors filtered out after adjustment by the M*N filters having a Fabry-Perot cavity structure merely include red, green, and blue; and obtain a color image by using the first color filter.

**9.** The apparatus according to any one of claims 3 to 5, wherein the first color filter is disposed in a rotation structure, the rotation structure further comprises at least one second color filter and a rotation axis, and is configured to adjust the first color filter and one color filter of the at least one second color filter by rotating the rotation axis of the rotation structure, so that the first color filter and the one color filter of the at least one second color filter are coaxial with the main lens, the micro lens array, and the imaging sensor; and
a quantity and an arrangement manner of single-color filters comprised in the at least one second color filter are the same as those of single-color filters comprised in the first color filter, and any two color filters in the first color filter and the at least one second color filter are single-color filters having different colors.

**10.** The apparatus according to claim 9, wherein the apparatus further comprises a second receiving module, a second control module, a second processing module, and a second synthesis module, wherein
the second receiving module is configured to obtain a second image acquisition instruction for color imaging, wherein the second image acquisition instruction carries an acquisition mode;
the second control module is configured to: when the acquisition mode is identified as a hyper spectral imaging mode, rotate the rotation axis of the rotation structure to adjust the first color filter and one color filter of the at least one second color filter comprised in the rotation structure, so that the first color filter and the one color filter of the at least one second color filter are coaxial with the main lens, the micro lens array, and the imaging sensor, and send, to the second processing module, a shooting instruction used to shoot one frame of image;
the second processing module is configured to: after receiving the shooting instruction, obtain one frame of image by using the one color filter, and send, to the second processing module, a completion instruction indicating that one frame of image is shot;
the second control module is further configured to: when receiving the completion instruction sent by the second processing module, rotate the rotation axis of the rotation structure again to adjust the first color filter and another color filter of the at least one second color filter comprised in the rotation structure, so that the first color filter and the another color filter of the at least one second color filter are coaxial with the main lens, the micro lens array, and the imaging sensor; send again, to the second processing module, a shooting instruction used to shoot one frame of image; and when all L color filters comprised in the rotation structure are used, send a synthesis instruction to the second synthesis module, so as to obtain L frames of images, wherein the synthesis instruction is used to instruct the second synthesis module to perform fusion processing on the L frames of images obtained by the second processing module by means of shooting, and L is a positive integer greater than 1; and
after receiving the synthesis instruction sent by the second control module, the second synthesis module performs fusion processing on the L frames of images to obtain a color image.

**11.** The apparatus according to claim 10, wherein the first color filter is an RGB filter;
the second control module is further configured to: when the acquisition mode is identified as an RGB imaging mode, rotate the rotation axis of the rotation structure to adjust the first color filter comprised in the rotation structure, so that the first color filter is coaxial with the main lens, the micro lens array, and the imaging sensor, and send, to the second processing module, a shooting instruction used to shoot one frame of image; and
the second processing module is configured to: after receiving the shooting instruction, obtain a color image by using the first color filter.

**12.** A method for obtaining a color image by using an image acquisition device, wherein the image acquisition device comprises the color imaging apparatus according to claim 9, and the method comprises:

receiving and obtaining, by the image acquisition device, a first image acquisition instruction for color imaging, wherein an acquisition mode carried in the first image acquisition instruction is a hyper spectral imaging mode; adjusting, by the image acquisition device by rotating the rotation axis of the rotation structure, the first color filter and one color filter of the at least one second color filter comprised in the rotation structure, so that the first color filter and the one color filter of the at least one second color filter are coaxial with the main lens, the micro lens array, and the imaging sensor; obtaining one frame of image by using the one color filter; and rotating the rotation axis of the rotation structure again to adjust the first color filter and another color filter of the at least one second color filter comprised in the rotation structure, so that the first color filter and the another color filter of the at least one second color filter are coaxial with the main lens, the micro lens array, and the imaging sensor, until all L color filters comprised in the rotation structure are used, so as to obtain L frames of images, wherein L is a positive integer greater than 1; and
performing, by the image acquisition device, fusion processing on the L frames of images to obtain a color image.

**13.** The method according to claim 12, wherein when the first color filter is an RGB filter, the method further comprises:

receiving and obtaining, by the image acquisition device, a second image acquisition instruction for color imaging, wherein an acquisition mode carried in the second image acquisition instruction is a red-green-blue RGB imaging mode; and
adjusting, by the image acquisition device, the first color filter, so that the first color filter is coaxial with the main lens, the micro lens array, and the imaging sensor, and obtaining a color image by using the first color filter.

**14.** A method for obtaining a color image by using an image acquisition device, wherein the image acquisition device comprises the color imaging apparatus according to claim 6, and the method comprises:

receiving and obtaining, by the image acquisition device, a first image acquisition instruction for color imaging, wherein an acquisition mode carried in the first image acquisition instruction is a hyper spectral imaging mode; adjusting, by the image acquisition device, a voltage to change colors filtered out by the M*N filters that have a Fabry-Perot cavity structure and that are comprised in the first color filter; obtaining one frame of image by using the first color filter; and adjusting a voltage again to change colors filtered out by the M*N filters that have a Fabry-Perot cavity structure and that are comprised in the first color filter, until a quantity of colors that the filters having a Fabry-Perot cavity structure are capable of filtering out is reached, so as to obtain L frames of images, wherein colors filtered out after each time of adjustment by the M*N filters having a Fabry-Perot cavity structure are different, colors separately filtered out after any two times of adjustment by the M*N filters that have a Fabry-Perot cavity structure and that are in the first color filter are different, and L is equal to the quantity of colors that the filters having a Fabry-Perot cavity structure are capable of filtering out; and
performing, by the image acquisition device, fusion processing on the L frames of images to obtain a color image.

**15.** The method according to claim 14, further comprising:

receiving and obtaining, by the image acquisition device, a second image acquisition instruction for color imaging, wherein an acquisition mode carried in the second image acquisition instruction is a red-green-blue RGB imaging mode;
adjusting, by the image acquisition device, a voltage to change colors filtered out by the M*N filters that have a Fabry-Perot cavity structure and that are comprised in the first color filter, wherein colors filtered out after adjustment by the M*N filters having a Fabry-Perot cavity structure merely include red, green, and blue; and
obtaining, by the image acquisition device, a color image by using the first color filter.

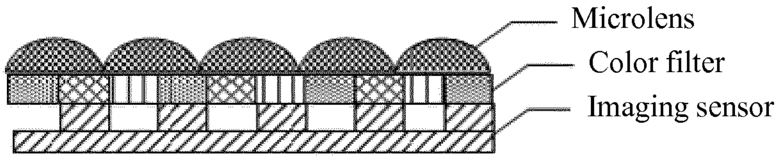
Microlens
Color filter
Imaging sensor

FIG. 1

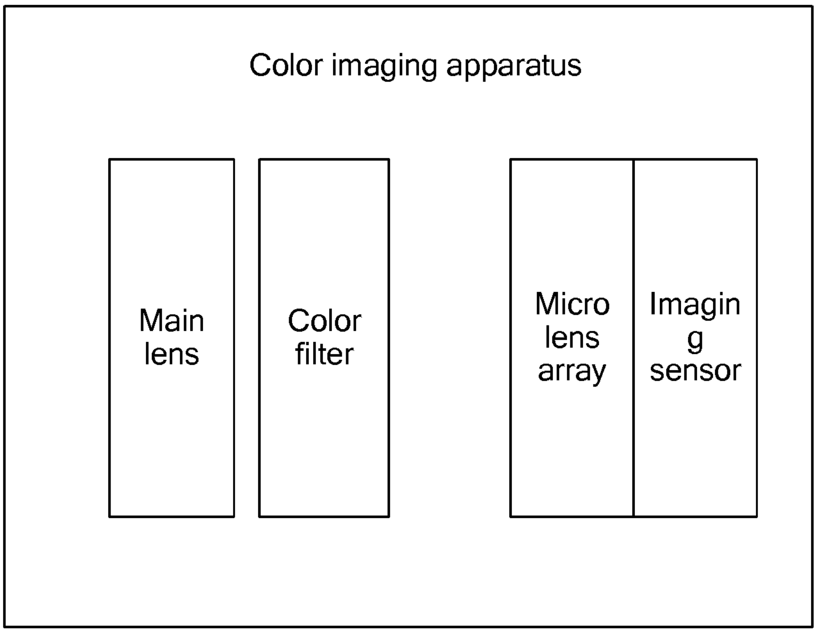
Color imaging apparatus
Main lens
Color filter
Micro lens array
Imagin g sensor

FIG. 2

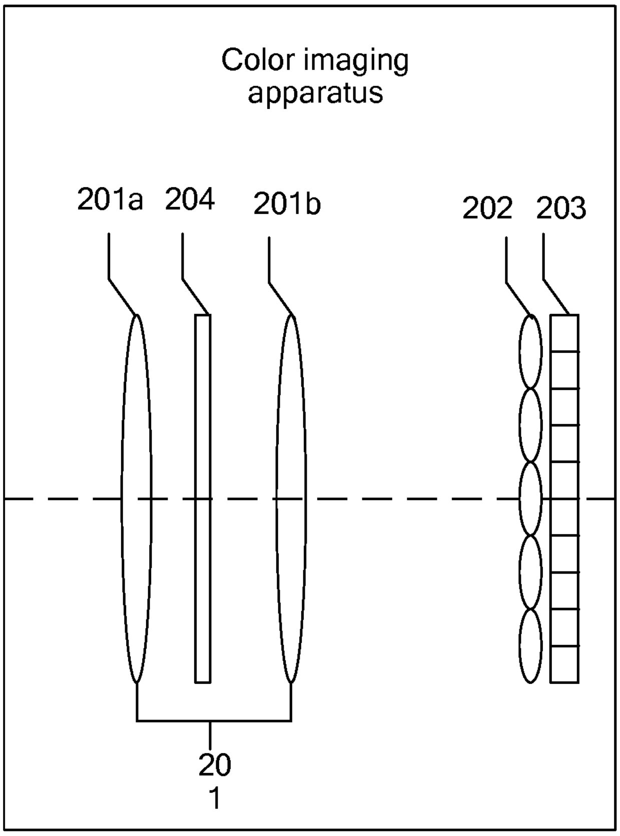


FIG. 3

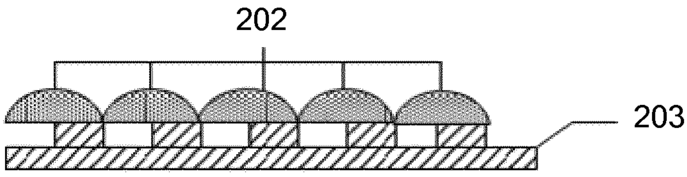


FIG. 4

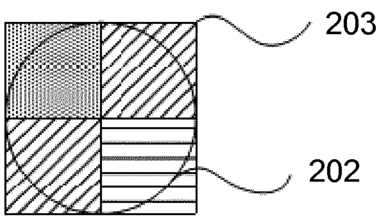


FIG. 5

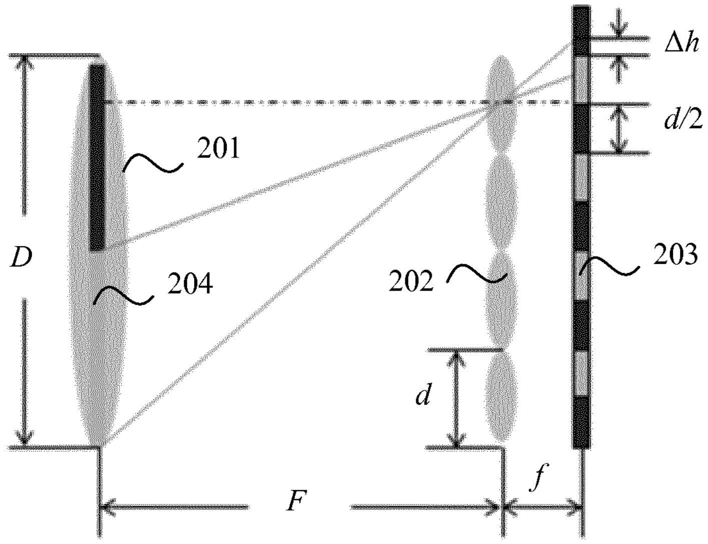


FIG. 6

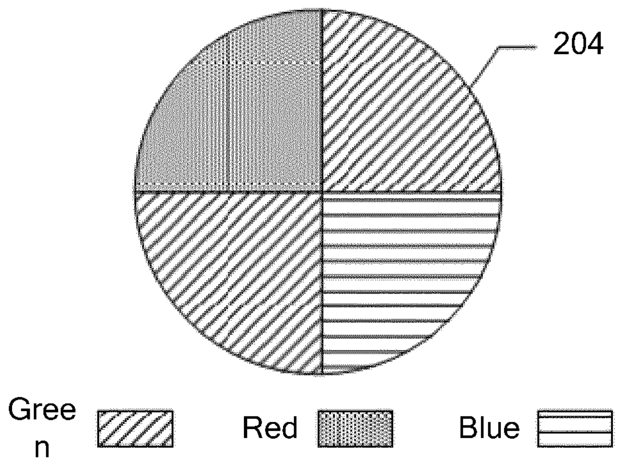


FIG. 7

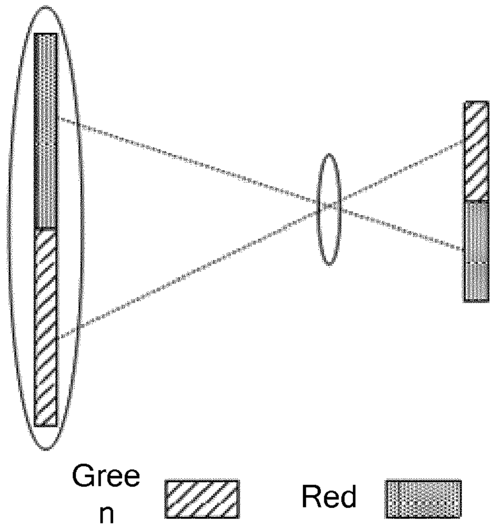


FIG. 8A

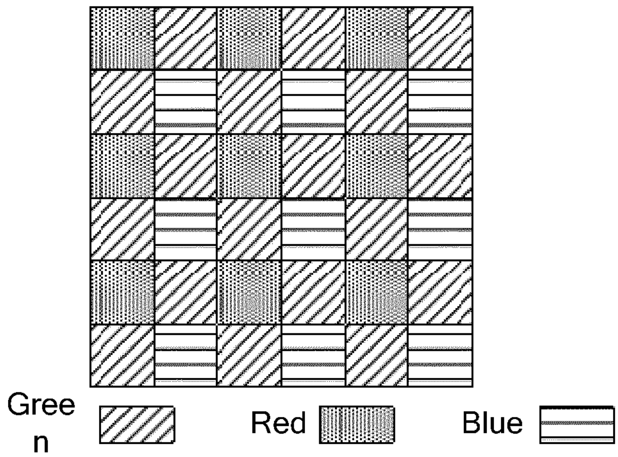


FIG. 8B

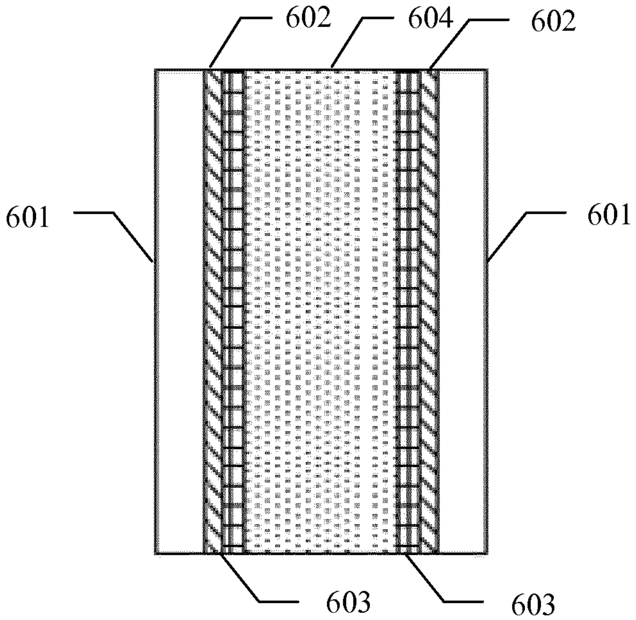


FIG. 9

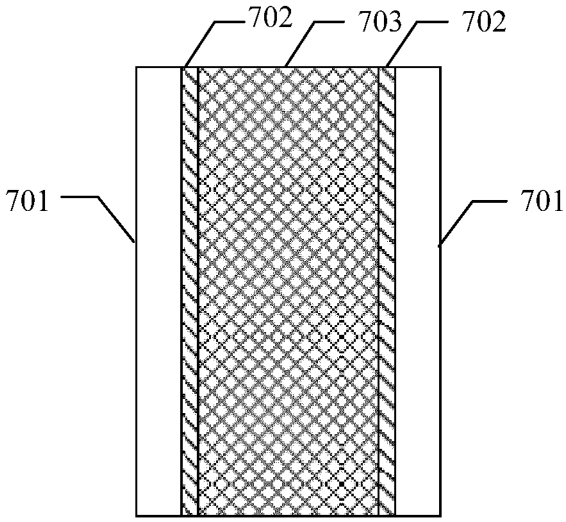


FIG. 10

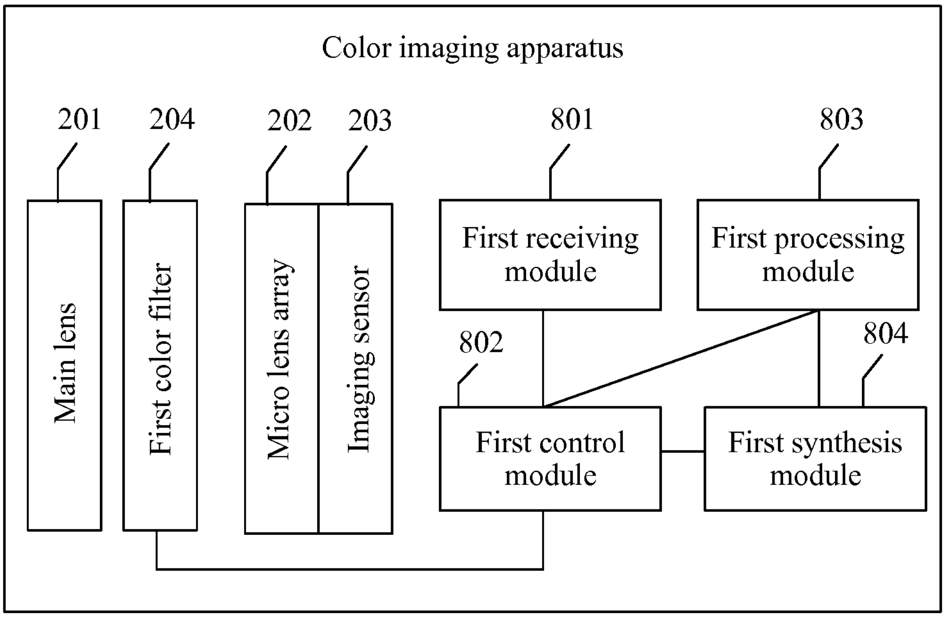
Color imaging apparatus
201
204
202
203
801
803
Main lens
First color filter
Micro lens array
Imaging sensor
First receiving module
First processing module
802
804
First control module
First synthesis module

FIG. 11

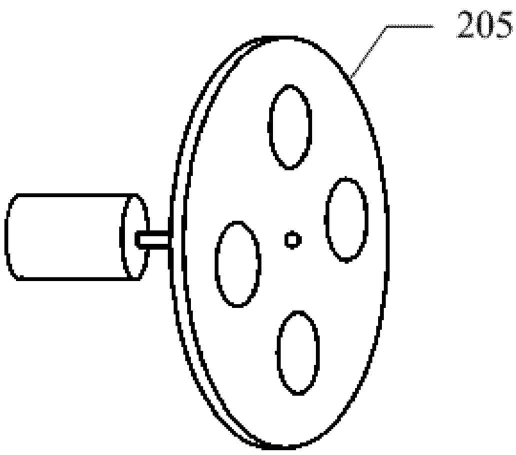
205

FIG. 12

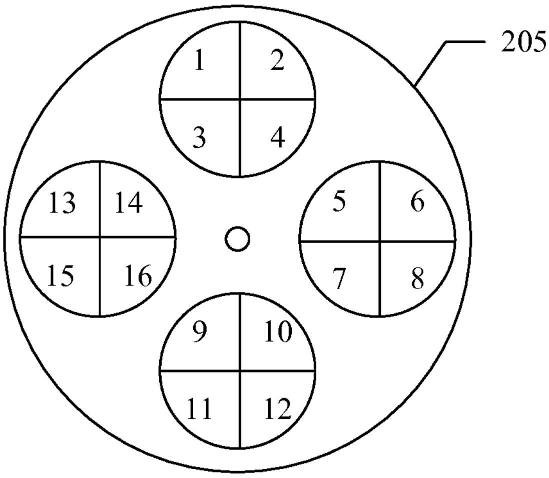
205
1
2
3
4
5
6
7
8
9
10
11
12
13
14
15
16

FIG. 13

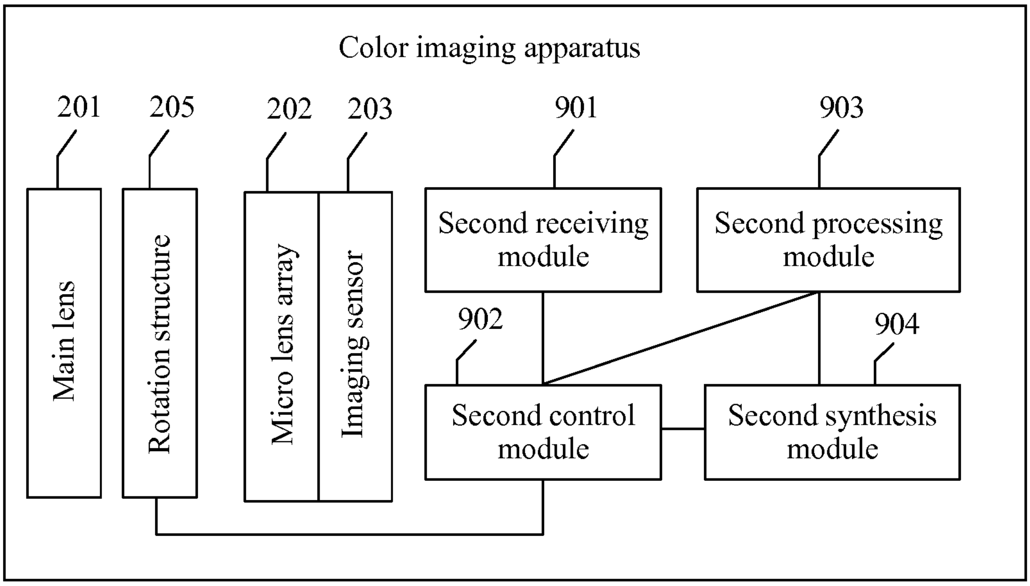
Color imaging apparatus
201
205
202
203
901
903
Main lens
Rotation structure
Micro lens array
Imaging sensor
Second receiving module
Second processing module
902
904
Second control module
Second synthesis module

FIG. 14

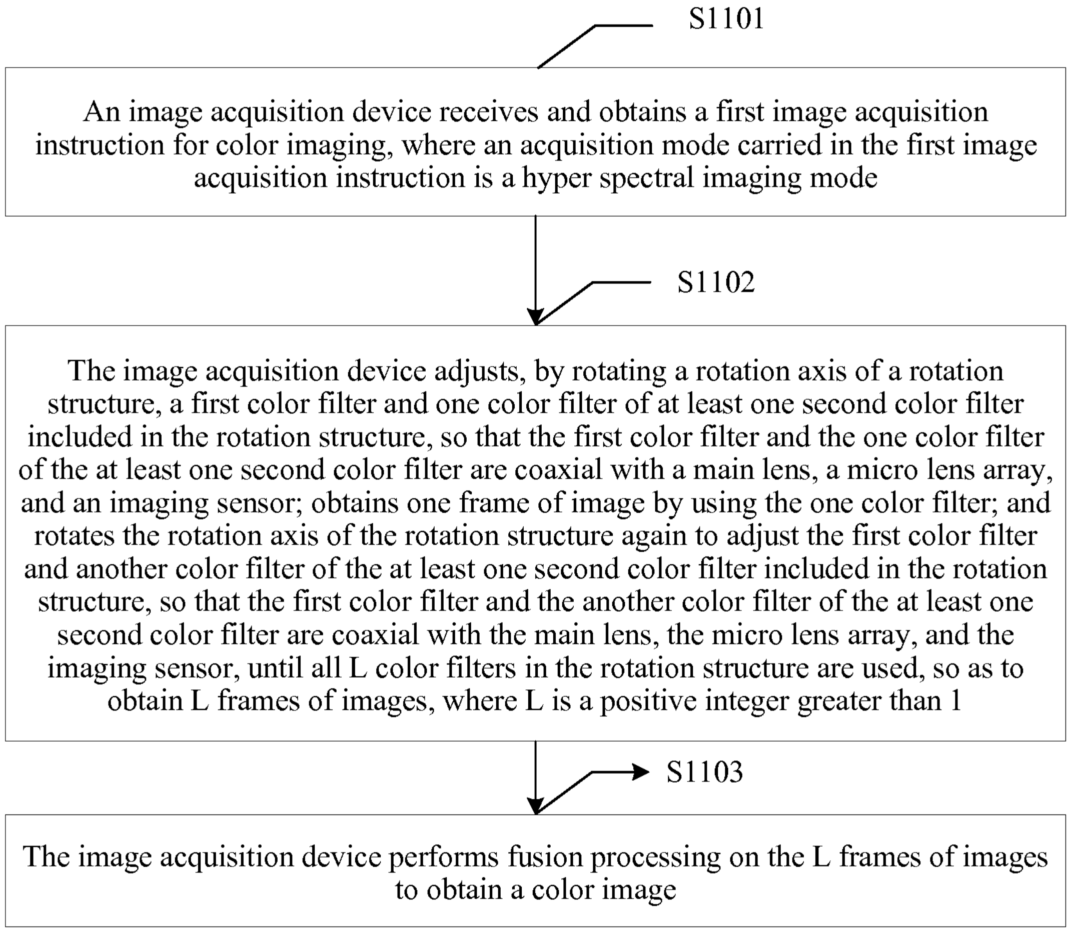
S1101
An image acquisition device receives and obtains a first image acquisition instruction for color imaging, where an acquisition mode carried in the first image acquisition instruction is a hyper spectral imaging mode
S1102
The image acquisition device adjusts, by rotating a rotation axis of a rotation structure, a first color filter and one color filter of at least one second color filter included in the rotation structure, so that the first color filter and the one color filter of the at least one second color filter are coaxial with a main lens, a micro lens array, and an imaging sensor; obtains one frame of image by using the one color filter; and rotates the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor, until all L color filters in the rotation structure are used, so as to obtain L frames of images, where L is a positive integer greater than 1
S1103
The image acquisition device performs fusion processing on the L frames of images to obtain a color image

FIG. 15

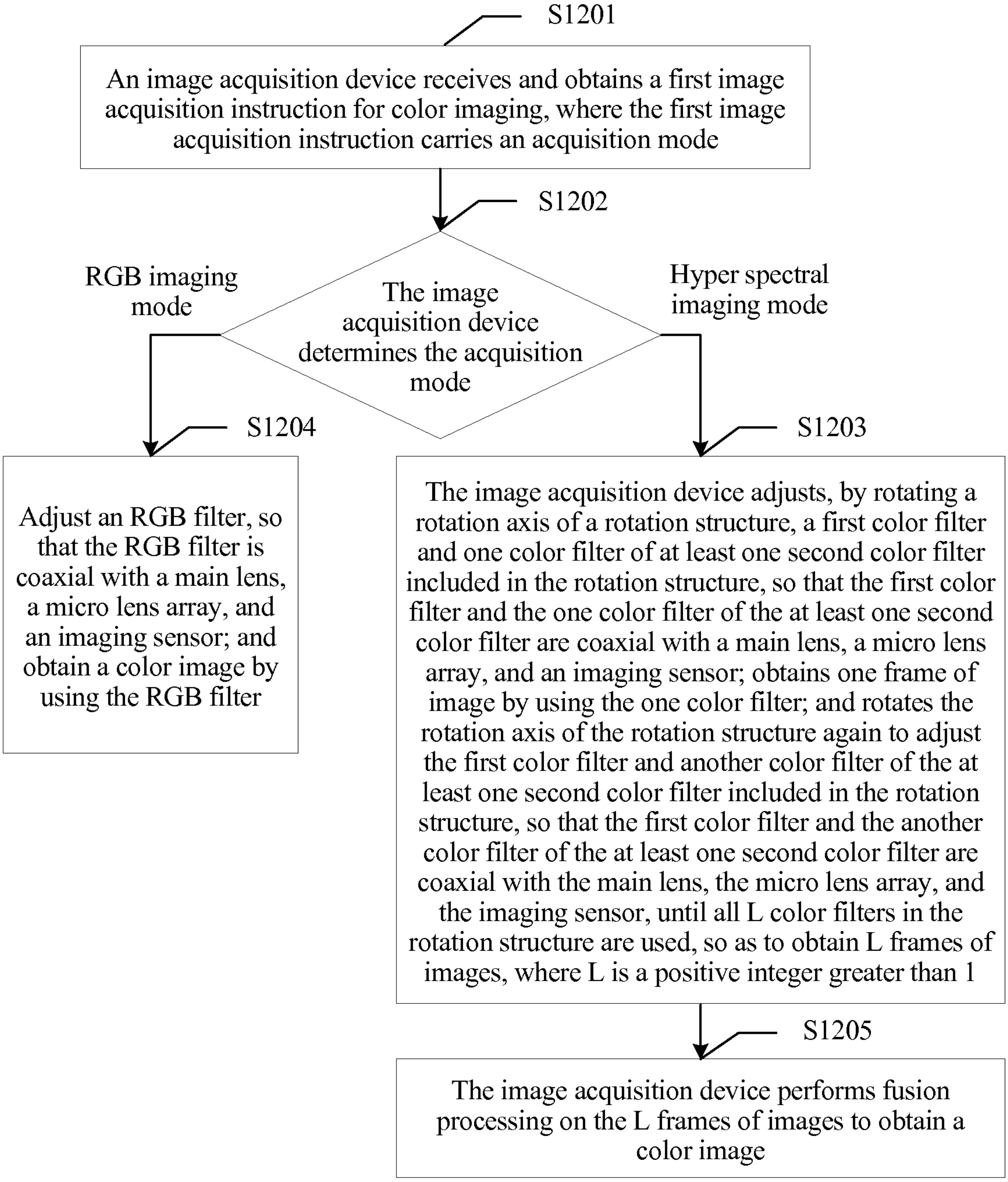
S1201
An image acquisition device receives and obtains a first image acquisition instruction for color imaging, where the first image acquisition instruction carries an acquisition mode
S1202
The image acquisition device determines the acquisition mode
RGB imaging mode
Hyper spectral imaging mode
S1204
Adjust an RGB filter, so that the RGB filter is coaxial with a main lens, a micro lens array, and an imaging sensor; and obtain a color image by using the RGB filter
S1203
The image acquisition device adjusts, by rotating a rotation axis of a rotation structure, a first color filter and one color filter of at least one second color filter included in the rotation structure, so that the first color filter and the one color filter of the at least one second color filter are coaxial with a main lens, a micro lens array, and an imaging sensor; obtains one frame of image by using the one color filter; and rotates the rotation axis of the rotation structure again to adjust the first color filter and another color filter of the at least one second color filter included in the rotation structure, so that the first color filter and the another color filter of the at least one second color filter are coaxial with the main lens, the micro lens array, and the imaging sensor, until all L color filters in the rotation structure are used, so as to obtain L frames of images, where L is a positive integer greater than 1
S1205
The image acquisition device performs fusion processing on the L frames of images to obtain a color image

FIG. 16

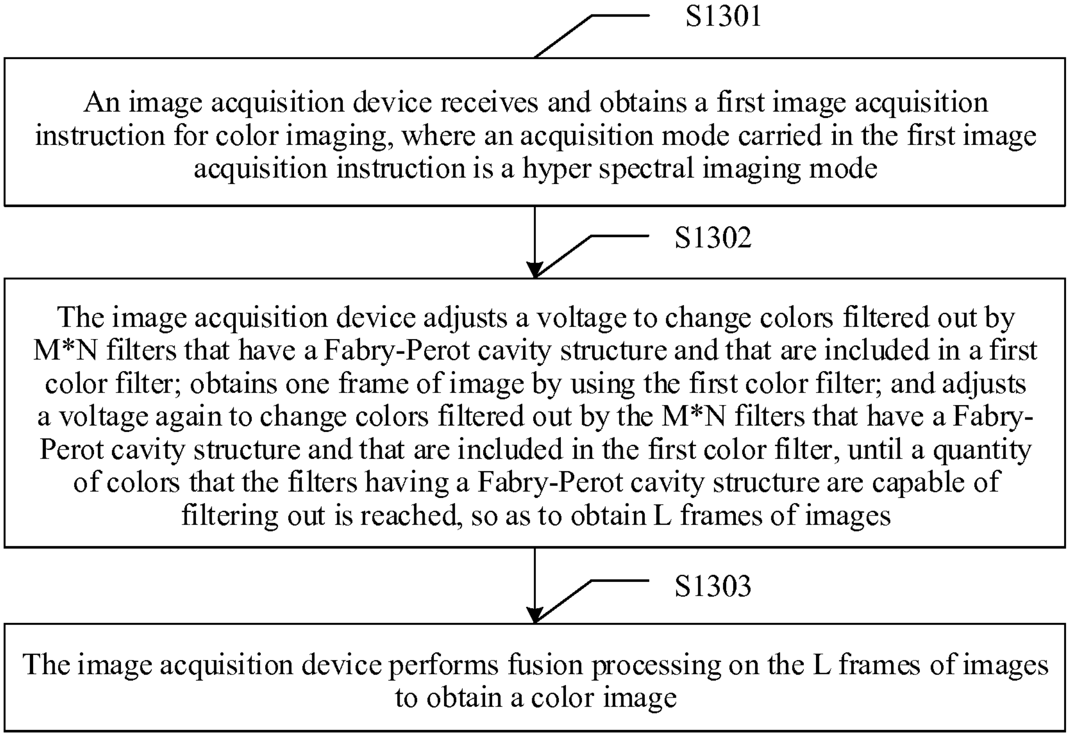
S1301
An image acquisition device receives and obtains a first image acquisition instruction for color imaging, where an acquisition mode carried in the first image acquisition instruction is a hyper spectral imaging mode
S1302
The image acquisition device adjusts a voltage to change colors filtered out by M*N filters that have a Fabry-Perot cavity structure and that are included in a first color filter; obtains one frame of image by using the first color filter; and adjusts a voltage again to change colors filtered out by the M*N filters that have a Fabry-Perot cavity structure and that are included in the first color filter, until a quantity of colors that the filters having a Fabry-Perot cavity structure are capable of filtering out is reached, so as to obtain L frames of images
S1303
The image acquisition device performs fusion processing on the L frames of images to obtain a color image

FIG. 17

# INTERNATIONAL SEARCH REPORT

International application No.
**PCT/CN2016/096086**

**A. CLASSIFICATION OF SUBJECT MATTER**

H04N 9/04 (2006.01) i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, WPI, EPODOC, IEEE, CNKI: optical filter, fabry-perot, pixel, red green and blue, RGB, filter, fabry-perot cell, liquid crystal, electric light crystal, image sensor, microlens, array, lens, pixel array, distance, RGB, Bayer array, composition, color filter

**C. DOCUMENTS CONSIDERED TO BE RELEVANT**

| Category* | Citation of document, with indication, where appropriate, of the relevant passages | Relevant to claim No. |
|---|---|---|
| Y | CN 103686102 A (RICOH CO., LTD.), 26 March 2014 (26.03.2014), description, paragraphs [0039]-[0040], and figures 1-3 | 1, 3-6 |
| Y | CN 104580950 A (OMNIVISION TECHNOLOGIES INC.), 29 April 2015 (29.04.2015), description, paragraphs [0019], [0021] and [0028], and figures 2-3 | 1, 3-6 |
| A | CN 105093472 A (HUAWEI TECHNOLOGIES CO., LTD.), 25 November 2015 (25.11.2015), the whole document | 1-15 |
| A | CN 101500085 A (SONY CORPORATION), 05 August 2009 (05.08.2009), the whole document | 1-15 |
| A | US 2015201142 A1 (RAMBUS INC.), 16 July 2015 (16.07.2015), the whole document | 1-15 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 19 September 2016 (19.09.2016) | **21 October 2016 (21.10.2016)** |

Name and mailing address of the ISA/CN:
State Intellectual Property Office of the P. R. China
No. 6, Xitucheng Road, Jimenqiao
Haidian District, Beijing 100088, China
Facsimile No.: (86-10) 62019451

Authorized officer
**ZHANG, Yueyang**
Telephone No.: (86-10) **62413436**

Form PCT/ISA/210 (second sheet) (July 2009)

# INTERNATIONAL SEARCH REPORT
Information on patent family members

International application No.
**PCT/CN2016/096086**

| Patent Documents referred in the Report | Publication Date | Patent Family | Publication Date |
|---|---|---|---|
| CN 103686102 A | 26 March 2014 | JP 2014075780 A | 24 April 2014 |
| | | US 9307127 B2 | 05 April 2016 |
| | | US 2014078379 A1 | 20 March 2014 |
| CN 104580950 A | 29 April 2015 | TW 201517257 A | 01 May 2015 |
| | | HK 1209551 A1 | 01 April 2016 |
| | | US 2015116562 A1 | 30 April 2015 |
| | | US 9386203 B2 | 05 July 2016 |
| CN 105093472 A | 25 November 2015 | None | |
| CN 101500085 A | 05 August 2009 | JP 2009177728 A | 06 August 2009 |
| | | EP 2083447 A1 | 29 July 2009 |
| | | EP 2083447 B1 | 06 July 2011 |
| | | US 2009190022 A1 | 30 July 2009 |
| | | JP 4483951 B2 | 16 June 2010 |
| | | US 8106994 B2 | 31 January 2012 |
| US 2015201142 A1 | 16 July 2015 | US 2015070544 A1 | 12 March 2015 |
| | | US 9001251 B2 | 07 April 2015 |
| | | WO 2015038569 A2 | 19 March 2015 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201610112996